# EUROPÄISCHE PATENTSCHRIFT

(11) **EP 0 810 428 B1**
(45) Veröffentlichungstag und Bekanntmachung des Hinweises auf die Patenterteilung: **28.04.2004**
(21) Anmeldenummer: 97107943.9
(22) Anmeldetag: 15.05.1997
(51) Int. Cl.: G01N 1/30, G01N 35/10, G01N 21/78, C12M 1/00, C12M 3/00

(54) **Automatisierte Vorrichtung und Verfahren zum Messen und Bestimmen von Molekülen oder Teilen davon**
Automated device and method for measuring and identifying molecules or fragments thereof
Appareil automatique et procédé de mesure et d'identification de molécules ou de fragments de molécules

(30) Priorität: 29.05.1996 DE 19621364; 07.03.1997 DE 19709348
(43) Veröffentlichungstag der Anmeldung: 03.12.1997
(73) Patentinhaber: Schubert, Walter, Dr., 39175 Biederitz (DE)
(72) Erfinder: Schubert, Walter, Dr., 39175 Biederitz (DE)
(74) Vertreter: Hofstetter, Alfons J., Dr.rer.nat.

(56) Entgegenhaltungen:
- WO-A-87/06008
- WO-A-96/05488
- DE-A- 4 329 791
- US-A- 5 190 727
- US-A- 5 443 791

## Beschreibung

Die vorliegende Erfindung betrifft eine automatisierte Vorrichtung zur Bestimmung und Messung einer beliebigen Anzahl Xn (n = 1,2,3...N) von Molekülklassen, Molekülteilen oder Molekülgruppen in einem flüssigen oder festen Objekt. Weiterhin betrifft die Erfindung ein Verfahren zur Bestimmung und Kartierung einer beliebigen Anzahl Xn (n= 1,2,3...N) an Molekülklassen, Molekülteilen oder Molekülgruppen in einem flüssigen oder festen Objekt, wobei automatisch eine beliebige Anzahl von Reagenzien gleichzeitig oder sequentiell auf ein Objekt aufgebracht und gemessen wird.

Im naturwissenschaftlichen Bereich, insbesondere der Biologie, Chemie, Biochemie und in der Medizin werden verschiedene Techniken und Verfahren angewandt, um die korrelative Verteilung und/oder Kombination und Anordnung von verschiedenen Molekülklassen bzw. Molekülgruppen, wie beispielsweise von Eiweißmolekülen oder Polymeren, oder gegebenenfalls das färberische Verhalten des Objekts zu untersuchen und zu bestimmen. Das Ziel dieser verschiedenen Verfahren und Techniken besteht in der Gewinnung von Kenntnissen der Anordnung, Verteilung und Struktur der Molekülgruppen in den jeweiligen flüssigen oder festen Objekten. Dabei werden die zu untersuchenden Objekte mit spezifischen Lösungen versetzt, um beispielsweise anhand der gebildeten Komplexe (z.B. EDTA-Metallkomplexe oder Antigen-Antikörper-Komplexe, etc.) die spezifischen Molekülklassen oder Molekülgruppen zu untersuchen und zu bestimmen. Insbesondere in der Medizin und Biologie werden derartige Verfahren angewandt, um über die Anordnung und Verteilung solcher Molekülspezies im jeweiligen Objekt diagnostische Meßdaten zu bestimmten Krankheitsbildern zu erhalten, oder Kenntnisse über die molekulare Organisation von Zellen oder Zellsystemen zu gewinnen.

Die aus dem Stand der Technik bekannten manuellen Verfahren werden nach einem bestimmten Schema durchgeführt. So wird im biologischen oder medizinischen Bereich das zu untersuchende Objekt mit einer Lösung versetzt,.die ein spezifisches Reagenz enthält. Dieses Reagenz kann ein Farbstoff, ein Antikörper etc. sein, welches mit einer bestimmten Molekülgruppe, insbesondere unter Bildung eines spezifischen Komplexes, reagiert. Das heißt, das spezifische Reagenz markiert spezifische Gruppen bzw. Stellen im zu untersuchenden Objekt. Nach einer bestimmten Einwirkungszeit wird das spezifisch markierte Objekt untersucht. Dies geschieht allgemein mit Hilfe von Signalverteilungsmustern, beispielsweise bei der mikroskopischen Untersuchung von Zellen durch unterschiedliche Fluoreszenzsignale unter Verwendung von Fluoreszein-iso-thio-cyanat oder Phycoerythrin.

Ein Teil der manuellen Verfahren, wie z.B. die Anfärbung von Gewebeschnitten mit einfachen Farblösungen, kann nach dem Stand der Technik auch von speziellen Färbeautomaten durchgeführt werden, für einfache Molekül-Markierungen in Zellen existieren Markierungsautomaten.

Für diese beiden Verfahrensweisen - manuelle und automatische Behandlung von Objekten, speziell von Zellen oder Gewebeschnitten mit Reagenzien - gilt jedoch, daß die Ergebnisse visuell kontrolliert und in einem anderen, speziell dafür vorgesehenen gesonderten Gerät, nach manueller Einrichtung des Objektes in diesem Gerät, zum Beispiel einem Mikroskop, ausgewertet werden müssen.

DE-A-43 29 791 beschreibt einen Pipettierroboter, der sich in 3-Richtungen bewegt und durch einen Computer gesteuert und kontrolliert wird. Somit werden Reaktionsgefäße transportiert und Flüssigkeiten entnommen oder abgegeben.

Komplexere Verfahren der Behandlung von Objekten mit Reagenzien, wie zum Beispiel das sequentielle Aufbringen verschiedenster Lösungen auf Zellen, die zu bestimmten Zeitpunkten während dieses Vorgangs ausgewertet oder aufgezeichnet werden müssen, sind nach dem Stand der Technik vollkommen auf manuelle Verfahren beschränkt, und extrem fehler-behaftet, d.h. nicht quantitativ auswertbar oder statistisch verwertbar. Wenn solche Methoden sehr genaue Zeitkontrollen der einzelnen Zwischenschritte (z.B. in exakt 20 minütigen Abständen) über ein großes Gesamt-Zeitintervall erfordern (z.B. über 34 Std.) werden die Grenzen der Durchführbarkeit durch einen Untersucher bei weitem überschritten.

Um die korrelative Verteilung mehrerer Molekülklassen zueinander festzustellen, werden in der Biomedizin häufig mehrere verschiedene Fluorochrome verwendet, die jeweils (direkt oder indirekt) an die zu lokalisierenden Molekülklassen gekoppelt werden. In diesem Fall werden die von diesen unterschiedlichen Fluorochromen ausgehenden Fluoreszenzsignale getrennt erfaßt. Die Beziehungssetzung dieser Signale zueinander ergibt schließlich Informationen über die korrelative Verteilung der verschiedenen Molekülklassen.

Diese Verfahren, die vor allem für die Untersuchung kombinatorischer molekularer Differenzierungsprozesse von Bedeutung sind, sind jedoch auf die Untersuchung von maximal 4 bis 5 verschiedenen Fluoreszenzsignalen in einer gegebenen Probe limitiert, da eine größere Anzahl verschiedener Fluoreszenzsignale nicht voneinander getrennt werden kann. Die bisher existierenden Verfahren sind daher hinsichtlich der in ein- und derselben Probe bestimmbaren und lokalisierbaren Molekülklassen sehr eingeschränkt. Höhergradige kombinatorische Ordnungsformen können daher bisher nicht erfaßt werden.

Eine Überwindung dieser Beschränkung ist nur möglich, indem in einem ersten Schritt nach einer Markierung von bestimmten Molekülklassen oder Molekülgruppen in der oben beschriebenen Weise die am Ort dieser Markierung gebundenen Fluorochrome durch Bleichen infolge UV-Bestrahlung zerstört werden.

Danach wird eine zweite bzw. weitere Lösung auf das Objekt gegeben, die ein bis maximal 5 verschiedene Fluorochrome für die Markierung weiterer Molekülklassen enthält. Nach der erforderlichen Einwirkungszeit erhält man wiederum neue spezielle Signalverteilungsmuster von den spezifisch markierten Molekülen. Nach Bleichen der Fluorochrome wird dieser Vorgang mehrmals wiederholt. Die Anzahl an Signalverteilungsmuster steigt somit mit der Anzahl der verwendeten Reagenzlösungen. Diese verschiedenen Signalverteilungsmuster können Aufschluß über die Anordnung und Verteilung der Molekülgruppen im Objekt geben.

Diese bisher bekannten Verfahren zur Bestimmung von Molekülklassen oder Molekülgruppen weisen jedoch erhebliche Nachteile auf, da die einzelnen Verfahrenschritte manuell durchgeführt werden. Diese manuell durchgeführten Verfahrensschritte sind sehr zeitaufwendig und für moderne Verfahren, die exakte quantitative Auswertungen zur Verfügung stellen müssen, stark fehlerbehaftet bzw. nicht hinreichend standardisierbar.

Beispielsweise wird die Reagenzlösung in der Regel per Hand auf das Objekt aufpipettiert, das Objekt wird dann manuell auf einen Mikroskopiertisch gelegt und entsprechend positioniert. Alle weiteren Pipettiervorgänge erfolgen dann manuell auf dem Objekt, das sich unverändert auf dem Objekttisch des Mikroskops befindet. Beim manuellen Pipettieren wird die genaue Dosierung der Reagenzlösung nicht immer exakt eingehalten. Es ist auch nicht möglich, beim wiederholten Pipettieren die Pipette mehrmals über die exakt gleiche Stelle des Objektes zu positionieren. Darüberhinaus passiert es auch sehr leicht, daß die Pipette mit dem zu untersuchenden Objekt in Berührung kommt, so daß diese Objektstelle verändert werden kann. Hieraus resultiert eine Verfälschung der Auswertungsergebnisse.

Für eine Testreihe mit mehr als 20 verschiedenen Markern, die halbstündlich manuell aufgebracht werden, werden für die Durchführung mehrere Tage benötigt. Eine sich daran anschließende Signal- oder Bildauswertung, d.h. die Bestimmung der korrelativen Molekülverteilungsmuster, kann ebenfalls mehrere Tage bis Wochen in Anspruch nehmen, da die verschiedenen Signalverteilungsmuster zunächst einzeln ausgewertet müssen, um sie dann zu einem Gesamtbild zusammenfügen zu können. Dieses Auswertungsverfahren ist ebenfalls sehr zeitintensiv. Um letztendlich zu einem Auswertungsergebnis zu gelangen, sind daher oft einige Wochen erforderlich. Aus den genannten Gründen ist es bei den bekannten Verfahren daher nur möglich, maximal 4-5 Molekülklassen in einem Objekt zu lokalisieren und zu bestimmen, d.h. die Anzahl der Molekülklassen oder Molekülgruppen, die bisher untersucht und bestimmt werden konnten, war sehr eingeschränkt.

Infolgedessen ist es derzeit nicht möglich, eine exakte quantitative Mikroskopie höherkomplexer molekularer Kombinationsmuster einzelner Proben zu betreiben.

Das Ziel der vorliegenden Erfindung ist es, die Nachteile bzw. Einschränkungen herkömmlicher Verfahren zur Bestimmung von Molekülklassen, Molekülgruppen oder Molekülteilen (z. b. Epitope, Domänen) in verschiedenen Objekten zu überwinden.

Die vorliegende Erfindung betrifft daher eine automatisierte Vorrichtung zur Bestimmung und Messung einer beliebigen Anzahl Xn (n = 1.2,3...n) an Molekülklassen, Molekülgruppen und Molekülteilen in einem flüssigen oder festen Objekt. Mit dieser Vorrichtung können beliebig viele Einzelmarkierungsmuster von ein- und demselben Objekt aufgenommen und durch computergestützte Bildüberlagerung in hochkomplexe molekulare Kombinationsmuster überführt werden.

Ein weiterer Gegenstand der Erfindung betrifft ein automatisches Verfahren, mit dem eine beliebige Anzahl X (X=1,2,3...N) verschiedener Molekülklassen oder Molekülgruppen in einem flüssigen oder festen Objekt automatisch bestimmt werden kann.

In diesem automatischen Verfahren -können auf der Grundlage wiederholter Fluoreszenzbleichungsvorgänge und durch Hintereinanderschalten einer beliebigen Anzahl von Fluoreszenzmarkierungen und Fluoreszenzbleichungen beliebige komplexe Kombinationen verschiedener Molekülspezies und Molekülklassen in ein- und derselben Struktur (bevorzugt biologischer) festgestellt werden. Dadurch können höhere Formen kombinatorischer Ordnung in Systemen, bevorzugt in biologischen Systemen, festgestellt werden.

Die Vorrichtung der vorliegenden Erfindung umfaßt ein Pipettiersystem, ein 3D-Handhabesystem sowie ein optisches Meßsystem. Besonders bevorzugt ist die Verwendung eines inversen oder aufrechten Mikroskopstativs. Das 3D-Handhabesystem umfaßt ein Roboter- oder Linearführungssystem. Ein Linearführungssystem, und damit die komplette lineare Anordnung eines Reagenzien-Racks, ist technisch wenig aufwendig und daher kostengünstig. Weiterhin ist auch ein Bildaufnahmegerät an die Vorrichtung angeschlossen und insbesondere mit der Mikroskopeinheit verbunden. Die Vorrichtung ist automatisiert, d. h. die Funktionsabläufe der Bestandteile im einzelnen und auch in Kombination miteinander werden durch einen Computer gesteuert und überwacht.

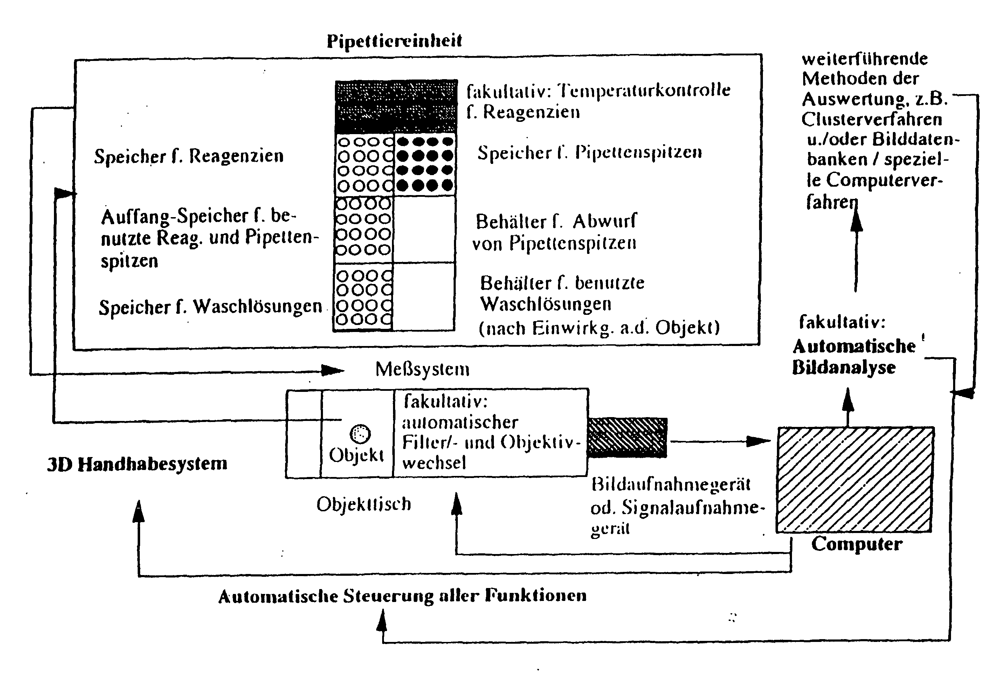

Die Figur zeigt den schematischen Aufbau einer Ausführungsform der erfindungsgemäßen Vorrichtung.

Automatische Pipettiergeräte sind aus dem Stand der Technik hinreichend bekannt. Sie sind jedoch für die erfindungsgemäße Vorrichtung nicht geeignet. Für die genaue Erfassung und Kartierung der verschiedenen Molekülklassen ist es nämlich erforderlich, daß die Pipettenspitze exakt an der gleichen Stelle des flüssigen oder festen Objekts wiederholt positioniert werden kann. Weiterhin ist es notwendig bzw. wünschenswert, daß die Pipettenspitze automatisch vor jeder Aufnahme einer neuen Lösung gewechselt wird, damit ausgeschlossen werden kann, daß noch ein geringer Anteil der vorher verwendeten Lösung in der Spitze enthalten ist. Das Pipettiersystem umfaßt einen Speicher für die Lösungen, einen Auffangspeicher für benutzte Lösungen und Pipettenspitzen, einen Speicher für die Waschlösungen, einen Speicher für die verwendbaren Pipettenspitzen, einen Behälter für die gebrauchten und abgeworfenen Pipettenspitzen und einen Behälter für die Waschlösungen nach der Einwirkungszeit. Zusätzlich kann die Pipettiereinheit eine Temperaturkontrolle für die gespeicherten Reagenzien aufweisen.

Das Pipettiersystem der erfindungsgemäßen Vorrichtung weist eine angemessene Wiederholpositioniergenauigkeit der Pipette an der Objektprobe auf, damit die Pipette beliebig oft an einen bestimmten Punkt des Objekts herangefahren werden kann. Bevorzugt ist eine Wiederholpositioniergenauigkeit von mindestens ± 0,1 mm. Weiterhin wird das Pipettiersystem so gesteuert, daß jede verwendete Lösung automatisch aufgenommen und auch automatisch abgegeben wird. Das Pipettiersystem weist eine hohe Beweglichkeit und Flexibilität auf.

3D-Handhabesysteme werden heutzutage in fast allen Bereichen der Industrie eingesetzt. Das 3D-Handhabesystem der vorliegenden Erfindung, das die Pipette in die Lösung führt, die gefüllte Pipette an das Objekt heranfährt und nach Abgabe der Lösung wieder in die Ausgangsstellung zurückfährt, muß eine an das Objekt angepaßte Wiederholpositioniergenauigkeit aufweisen. Die Wiederholpositioniergenauigkeit des 3D-Handhabesystems ist insbesondere für die Festlegung von bestimmten Punkten bzw. Stellen in den Objekten erforderlich, die während einer Testreihe mit verschiedenen Lösungen versetzt werden, um die spezifischen Molekülklassen zu untersuchen. Das 3D-Handhabesystem muß in der Lage sein, die während des gesamten Verfahrens vorab festgelegten Punkte im Objekt beliebig oft anzusteuern, da Abweichungen zu verfälschten Auswertungsergebnissen führen könnten. Infolgedessen weist es ebenfalls eine Wiederholpositioniergenauigkeit, vorzugsweise von mindestens ± 0,1 mm, auf. Das 3D-Handhabesystem bewegt sich innerhalb eines 3D-Arbeitsbereiches und hat eine Drehachse für die genaue Positionierung des Pipettiergerätes. Die einzelnen Funktionen des Pipettiersystems und des 3D-Handhabesystems sowie das technische Zusammenwirken beider Systeme sind computergesteuert.

Ein weiterer wesentlicher Bestandteil der erfindungsgemäßen automatisierten Vorrichtung ist das optische Meßsystem, insbesondere ein Mikroskop. Besonders bevorzugt ist die Verwendung eines inversen oder aufrechten Mikroskopstativs. Dieses Mikroskop kann bei Bedarf mit einer Klimabox zur Sicherung exakter physiologischer Bedingungen für lebende Zellen, insbesondere bei Langzeit-Experimenten ausgestattet sein. Das Mikroskopstativ weist einen automatischen Filter- und Objektivwechsel auf.

Mit dem Mikroskopstativ ist ein Bildaufnahmegerät verbunden. Dieses Bildaufnahmegerät ermöglicht die computergesteuerte Bildauswertung, da es nach jedem Durchgang das jeweilige Signalverteilungsmuster, das über das Mikroskop optisch vermittelt wird, aufnimmt.

Die automatisierte Vorrichtung der vorliegenden Erfindung in ihrer Gesamtheit weist die folgenden technischen Parameter auf:
1. Steuerbarkeit durch einen zentralen Rechner
2. automatischer Pipettenspitzenwechsel
3. Wiederholpositioniergenauigkeit des 3D-Handhabesystems und des Pipettiersystems, bevorzugterweise von mindestens +-0,1 mm
4. keine Beeinträchtigung der einzelnen Systeme durch Schwingungen, Emissionen, Felder bzw. des Benutzers durch Lärm
5. gegebenenfalls Thermostatierung
6. Gewährleistung eines 3D-Arbeitsbereiches und einer Drehachse für die exakte Positionierung des Pipettiergerätes.

Die erfindungsgemäße automatische Vorrichtung kann in vielen Anwendungsgebieten der Naturwissenschaften, insbesondere der Biologie und der Medizin, eingesetzt werden. Besonders wichtige Anwendungsgebiete stellen die Krebs- und Immun-Forschung bzw. - Diagnostik dar.

Das erfindungsgemäße Verfahren zur Bestimmung von Molekülklassen oder Molekülgruppen in festen oder flüssigen Objekten ist durch die Merkmale des Anspruch 1 gekennzeichnet. Das Verfahren umfaßt die folgenden automatischen Verfahrensschritte:
I. eine Reagenzlösung Y1 wird von dem Pipettiersystem aus einem die Lösung Y1 enthaltenden Behälter automatisch entnommen.
II. Die Lösung Y1 wird automatisch auf das Objekt (fest oder flüssig) aufgebracht, das sich auf einer objekttragenden Vorrichtung befindet.
III. Die Lösung Y1 wirkt über eine bestimmte, automatisch eingestellte Zeit auf das Objekt ein.
IV. Sofort im Anschluß an dieses Einwirken oder gegebenenfalls auch während des Einwirkens kann durch automatische Betätigung des Bildaufnahmesystems des Mikroskops ein Bild des mit der Lösung Y1 behandelten Objekts aufgezeichnet werden. Alternativ kann vor Schritt IV der Schritt V eingeschaltet werden.
V. Nachdem die Lösung Y1 über eine bestimmte, automatisch eingestellte Zeit auf das Objekt eingewirkt hat, wird die Lösung Y1 durch das Pipettiersystem abgesaugt.

Im Schritt VI sind in Abhängigkeit vom Objekt und der durchzuführenden speziellen Bestimmung verschiedene Alternativen möglich.
VIa. Eine zweite Lösung Y2 oder die Lösung Y1 oder ein Gemisch aus Y1 und Y2 wird durch das Pipettiersystem aufgetragen.
VIb. Nach dem Entfernen der Lösung Y1, der Lösung Y2 oder eines Gemisches aus Y1 und Y2 wird eine Waschlösung Z1 mit dem Pipettiersystem automatisch auf das Objekt gebracht und wirkt über einen bestimmbaren Zeitraum auf das Objekt ein.
VIc. Sofort nach dem Entfernen der Lösung Y1 wird eine Waschlösung Z2 oder Z3 oder Zn (n= 1,2,3...N) durch das Pipettiersystem automatisch aufgebracht.
VId. Sofort nach Entfernen der Lösung Y1 werden die Waschlösungen Z1 bis Zn in variabel festlegbarer Reihenfolge auf das Objekt aufgetragen.
VIe. Nach einer variabel automatisch eingestellten Zeit nach der Einwirkung und dem Entfernen der Lösung Y1 wird eine Waschlösung Z1 auf das Objekt gebracht.
VIf. Es werden erst nach einer variablen bestimmten eingestellten Zeit Waschlösungen Z1 bis Zn in einer bestimmten Reihenfolge und mit einer bestimmten Einwirkungsdauer automatisch auf das Objekt aufgebracht.
VII. Die Schritte I-VIf können mit einer Lösung Y3 oder mit verschiedenen, beliebig vielen Lösungen Yn oder mit einem Gemisch aus den verschiedenen Lösungen Yn beliebig oft wiederholt werden.

Die Schritte I-VII können jederzeit und an beliebigen Stellen der Verfahrensschritte unterbrochen werden und beliebig oft wiederholt werden, zumindest solange, wie es das zu untersuchende Objekt erlaubt. Die einzelnen Verfahrenszyklen können sehr schnell, vorzugsweise innerhalb eines Zeitraumes von 5 min bis 30 min durchgeführt werden.

Dieses erfindungsgemäße Verfahren kann mit der automatisierten Vorrichtung der vorliegenden Erfindung durchgeführt werden, die ein 3D-Handhabesystem, ein Pipettiersystem, ein optisches Meßsystem, insbesondere ein Mikroskopstativ, und ein Bildaufnahmegerät, welche von einem Computer automatisch gesteuert werden, umfaßt.

Das erfindungsgemäße Verfahren führt innerhalb einer bestimmten Zeit zu exakten quantitativen und qualitativen Auswertungsergebnissen. Weiterhin können beliebig viele Molekülklassen, Molekülspezies oder Teile von Molekülen in einem Objekt untersucht und bestimmt werden. Die bei der manuellen Durchführung auftretenden Fehlerquellen sind weitgehend ausgeschlossen. Damit weist das automatisch ablaufende Verfahren der vorliegenden Erfindung erhebliche Vorteile gegenüber den aus dem Stand der Technik bekannten Verfahren zur Untersuchung und Bestimmung verschiedener Molekülgruppen auf.

In einer bevorzugten Ausführungsform der vorliegenden Erfindung wird das Verfahren durchgeführt, um beliebig viele Molekülspezies oder Epitope in einer Zelle oder einer Gewebeprobe automatisch zu erfassen und zu kartieren. Das Ziel ist hierbei die Kenntnis der Anordnung und korrelativen Verteilung der Molekülgruppen, um Aufschluß über verschiedene Krankheiten und deren Behandlung zu erhalten. Dabei werden die Zellen oder Gewebeproben mit einer ersten Reagenzlösung Y1, die beispielsweise fluoreszierende Antikörper oder Liganden enthält, versetzt. Nach einer bestimmten Inkubationszeit werden von den spezifisch markierten Gewebeproben bzw. Zellen spezielle Markierungsverteilungsmuster aufgenommen und registriert.

Um die Markierungsverteilungsmuster aufzunehmen, wird beispielsweise unter automatischer Kontrolle eines Computers ein Fluorochrom automatisch angeregt, und ein Schieber der Videokamera für eine vorgegebene Zeit geöffnet. Dadurch wird das Fluoreszenzsignal aufgezeichnet, bevorzugt in Form eines digitalen Signals, d.h. eines digitalisierten Bildes. Nach der vorgegebenen Öffnungszeit des Schiebers wird der Schieber wieder automatisch geschlossen, ebenso der Schieber der automatischen Fluoreszenzanregung. Derselbe Vorgang kann für andere, gleichzeitig in der Probe befindliche, d.h. gebundene Fluorochrome automatisch unter Zwischenschaltungen der jeweils korrekten Fluoreszenzfilter und Schieberbetätigungen wiederholt werden.

Anschließend werden die spezifisch markierten Proben gebleicht und gewaschen und dann mit einer zweiten Reagenzlösung Y2 bzw. mit beliebig vielen Reagenzlösungen Yn oder deren Gemischen versetzt. Das automatische Verfahren, das mittels beliebig vieler solcher Markierungs-Bildaufnahme-Bleichungs-Zyklen durchgeführt werden kann, findet insbesondere Anwendung in der Medizin und Biologie. Solange das zu untersuchende feste oder flüssige Objekt es erlaubt, können die einzelnen Verfahrensschritte beliebig oft wiederholt werden. Der erste Verfahrensschritt und/oder die nachfolgenden Verfahrensschritte bzw. diese repetitiven Zyklen werden mittels eines optischen Verfahrens, wie beispielsweise der Fluoreszenzmikroskopie in Kombination mit der Durchlichtmikroskopie, durchgeführt. Der erste Verfahrensdurchgang wird beendet, indem mit Hilfe eines Durchlichtverfahrens von der markierten Gewebeprobe oder Zelle ein Bild, beispielsweise ein Phasenkontrastbild oder ein Differentialinterferenzkontrastbild, registriert wird. Jeder Zyklus schließt mit dieser Registrierung eines Bildes der spezifisch markierten Gewebeprobe oder der spezifisch markierten Zelle ab.

Auf diese Weise ist es möglich, durch repetitive Markierungs-Bildaufnahme-Bleichungszyklen beliebig viele Einzelmarkierungsmuster in der jeweilig untersuchten Probe, Zelle bzw. Gewebeprobe als Bilder zu erhalten und durch anschließende computerunterstützte Bildüberlagerung dieser Einzelmuster die daraus resultierenden komplexen Kombinationsmuster einzelner oder zahlreicher Molekülverteilungen zu ermitteln und beliebig als kombinatorische Muster auf die biologische Struktur (z.B. einer Zelle) quasi zu projizieren. Die Bildüberlagerung und die Bildanalyse kann von speziellen Computern automatisch durchgeführt werden. Mit Hilfe computerunterstützter Bildüberlagerungen einzelner oder zahlreicher Zellen gelingt es, die komplexen molekularen Organisationsformen in Zellen, die prinzipiell visuell auf direktem Wege als strukturgebundene Muster nicht mehr erfaßbar sind, in rationeller Weise, z. B. über Nacht, zu erkennen und auszuwerten. Eine langwierige Auswertung der einzelnen Bilder, wie z. B. manuelle Kopien von Mustern, entfällt damit. Darüberhinaus können wesentliche quantitative Aussagen über korrelative Molekülkonzentrationen und topologische Beziehungen nur über spezielle Algorithmen erhalten werden. Weiterhin war es wegen der bisher durchgeführten visuellen Auswertung auch kaum möglich, ein Gesamtbild aus den Einzelbildern zusammenzufügen bzw. das hochkomplexe kombinatorische Verhalten in ganzen Zellsystemen zu analysieren.

Mit Hilfe des erfindungsgemäßen Verfahrens ist es also möglich, eine Probe, Zelle oder Gewebeprobe beliebig oft mit beliebig vielen verschiedenen Reagenzlösungen spezifisch zu markieren. Dabei sind wesentliche sterische Behinderungen ausgeschlossen, wie durch Vertauschen der Reihenfolge der Reagenzien in jeder beliebigen Probe nachgewiesen werden kann, da die jeweiligen Markierungsergebnisse praktisch konstant bleiben. Die in dieser Ausführungsform der Erfindung verwendeten Reagenzien umfassen Antikörper, Lectine, Nukleinsäuren, Biotoxine, immunoglobulinbindende Moleküle (z.B. Proteine) oder andere spezifische Liganden, wie beispielsweise Fluorochrome oder Enzyme. Bevorzugt sind fluoreszierende Antikörper oder Liganden, insbesondere fluorochrom-konjugierte Antikörper oder Liganden. Die Objekte in dieser Ausführungsform können einzelne Zellen, mehrere Zellen, Gewebeschnitte oder aber auch auf bestimmte Träger aufgebrachte oder in bestimmten Medien (z.B. Gelen) enthaltene Moleküle sein.

Im folgenden werden die einzelnen automatisierten Verfahrensschritte zur Markierung und Messung von Molekülklassen in einer Zell- oder Gewebeprobe allgemein beschrieben, ohne das erfindungsgemäße Verfahren darauf zu beschränken. Die einzelnen Schritte können je nach Bedarf vertauscht oder weggelassen werden.

Ein Objekt, beispielsweise eine Zelle (z.B. fixierte Zellen, z.B. Aceton-fixierte Zellen, Natrium-azid-behandelte Zellen oder lebende Zellen) befindet sich auf dem Objekttisch des Mikroskops. Die automatisierten Verfahrensschritte werden nach manueller Vorbereitung der Probe und Aufbringen auf dem Objekttisch des

Gerätes wie folgt durchgeführt:
1. Aufnahme einer ersten Inkubationslösung Y1 (ein oder mehrere fluorochrom-konjugierte Reagenzien)
2. Aufpipettieren dieser Lösung Y1 auf das Objekt
3. Inkubation des Objekts mit dieser Lösung Y1 bei einer bestimmten Temperatur, z. B. Raumtemperatur.
4. Entfernen der Inkubationslösung Y1
5. Einmaliges oder mehrmaliges Auftropfen einer Waschlösung Z1, z.B. eine Pufferlösung
6. Entfernen der Waschlösung Z1
7. Registrierung des Fluoreszenzverteilungsmusters (Bildaufnahme) (Im Falle von mehreren Fluorochromen werden selektive Fluoreszenzaufnahmefilter bei der Bildaufnahme verwendet)
8. Aufpipettieren einer Waschlösung Z2
9. Bleichen der Probe mit Hilfe einer Fluoreszenzanregung
10. Der Bleichungsvorgang ist beendet, wenn keine Fluoreszenz mehr vorhanden ist. Dieser Zeitpunkt wird aufgrund von Vortests vorgegeben werden oder durch das Bildaufnahmesystem überprüft bzw. festgestellt werden.
11. Entfernen der Waschlösung Z2
12. Aufnahme einer zweiten Inkubationslösung Y2 (mit einem oder mehreren fluorochrom-konjugierten Reagenzien)
13. Auftropfen dieser Lösung auf dieselbe Zellprobe (wie oben, ohne diese zu berühren oder ohne ihre Position verschoben zu haben)
14. Fortsetzung wie unter 4-11. Danach Wiederholung desselben Vorgangs mit einer 3., 4., 5.,... N. Inkubationslösung.

Jeder Zyklus wird durch Registrierung des korrespondierenden Phasenkontrastbildes oder Differentialinterferenzkontrastbildes beendet. Die Verfahrensschritte 1-14 werden alle automatisch durchgeführt. Die Einzelbilder werden mittels eines Computers zu einem Gesamtbild durch Bildüberlagerung zusammengefügt und ausgewertet. Dieses molekulare Gesamtbild einer Einzelzelle bzw. Gewebeprobe gibt Aufschluß über die komplexe molekulare Organisationsform in Zellen, die prinzipiell bei einer entsprechend großen Zahl, z. B. 18 verschiedenen registrierten Molekülklassen, nicht visuell erfaßbar oder auswertbar ist, da sich bezogen auf das genannte Beispiel, eine Anzahl von 218 verschiedenen Kombinationen ergibt. Eine weitere Steigerung dieser Differenzierungsauflösung ist ohne weiteres möglich. Die bekannten Verfahren der kombinatorischen Analyse von Systemen, vor allem von zellulären Systemen, sind mit einem kombinatorischen Unterscheidungsvermögen von 23 bis maximal 25 strikt limitiert. Mit den bekannten Verfahren sind höhere molekulare Organisationsformen, die auf Kombinatorik beruhen, so nicht erfaßbar.

Im Unterschied zu allen bisher bekannten Verfahren der kombinatorischen Analyse.von Systemen, insbesondere von zellulären Systemen, weist das erfindungsgemäße Verfahren somit ein erheblich verbessertes kombinatorisch-molekulares Unterscheidungsvermögen (Auflösungsvermögen) auf.

Mit dem erfindungsgemäßen Verfahren können beispielsweise spezifische kombinatorische Differenzierungsspektren im Immunsystem allein aus einer einzelnen Blutentnahme erfaßt werden. Damit ist es auch insbesondere in der Biologie und Medizin möglich, mit dem erfindungsgemäßen Verfahren Aufschluß über die molekulare Anordnung bzw. die molekulare Verteilung einzelner Molekülgruppen sowie Aufschluß über spezielle Krankheitsbilder sowie deren Behandlungsmöglichkeiten zu erhalten.

So hat es sich bereits in der Anwendung des Verfahrens gezeigt, daß durch die praktisch unbegrenzte "Auflösung" für kombinatorische molekulare Differenzierung (d. h. Differenzierungsauflösung) abnorme molekulare Kombinationen auf Zelloberflächen von Zellen des Immunsystems vorkommen. Diese ergeben völlig neue Einblicke in abnorme Oberflächen-Kodierungen für Zellinvasionen, beispielsweise bei bestimmten neurodegenerativen Erkrankungen, und damit auch neue diagnostische und therapeutische Möglichkeiten.

Ein weiteres Anwendungsgebiet des erfindungsgemäßen Verfahrens kann in der Kartierung komplexer Genmuster, z.B. auf Gen Chips bestehen, die für Multi Drug Testing oder das Auffinden komplexer Mutationsmuster in der Zukunft von großer Bedeutung sein werden.

Das erfindungsgemäße Verfahren eignet sich jedoch besonders für die Bestimmung und Untersuchung von molekularen Organisationsformen in einer Zell- oder Gewebeprobe, ohne jedoch darauf beschränkt zu sein.

Generell kann jedoch jedes Objekt in flüssiger oder fester Form auf seine Molekülstruktur bzw. Anordnung oder Anwesenheit von Molekülteilen untersucht werden. Als Beispiele hierfür seien die Untersuchung und Bestimmung von Molekülanordnungen und -kombinationen in Halbleitern, Legierungen oder Kunststoffen genannt.

Das folgende Ausführungsbeispiel soll die Erfindung näher erläutern, ohne sie jedoch einzuschränken.

### Ausführungsbeispiel

Markierung von 18 verschiedenen Molekülklassen in einer Ansammlung einzelner Zellen (isolierte mononukleare Blutleukozyten, aufgebracht auf einen Objektträger), d.h. in ein- und derselben Probe durch automatisch gesteuerte repetitive Inkubations-Imaging-Bleaching-Zyklen (RIIBZ = wiederholte Inkubations-Bildaufnahme-Bleichungs-Zyklen).

### Vorbereitung:

1. Ein Deckglas wird mit den isolierten Zellen beschichtet.
2. Lufttrocknen der Zellen, ca. 10 min bei Raumtemperatur (RT)
3. Kurze Fixierung für 10 Sek. in Aceton (bei RT)
4. Kurz lufttrocknen
5. Deckglas sofort über vorgekühltes Isopentan in flüssigem Stickstoff schockfrieren.
6. (Langfristig bei minus 80 Grad lagern) oder
7. 20 min in Aceton bei minus 20 Grad dehydrieren.
8. Lufttrocknen bei RT
9. In PBS (Phosphate buffered saline, pH 7,4 ) rehydrieren
10. Präinkubation mit 1:30 normalem Ziegenserum
11. Waschen in PBS
12. Deckglas sofort auf einen speziellen Träger auf dem Objekttisch des inversen Mikroskops aufbringen.
13. Unter visueller Kontrolle durch das Okular die gesuchten Zellen unter Verwendung eines Phasenkontrastobjektivs einstellen.
14. Feuchte Kammer des Mikroskoptisches schließen.
15. Pipettierroboter einschalten
16. Reihenfolge und Zeitabstände für die Pipettier-Imaging-Bleaching-Schritte in den Computer eingeben
17. Reagenzien (Antikörperlösungen, Puffer) in die vorgegebenen Gefäße (z.B. Eppendorf-Reaktionsgefäße) in dem Rack des Automaten geben.

### Durchführung der RIIBZ durch den Automaten:

### Zyklus 1:

1. Eine Lösung A (100 Mikroliter Lösung, bestehend aus 80 Mikroliter phosphatgepuffertes Salz, pH 7,4 + 10 Mikroliter monoklonaler Antikörper-1, gekoppelt an Fluorescein-Iso-Thiocyanat (FITC), + 10 Mikroliter monoklonaler Antikörper-2, gekoppelt an Phycoerythrin (PE)) wird von dem Pipettierroboter aus einem Behältnis, das diese Lösung A enthält, entnommen. Das Behältnis ist ein Plastik-Reaktionsgefäß.
2. Die Lösung A wird durch den Pipettierroboter auf das Objekt (Zellen auf dem Deckglas) aufgebracht, das sich auf dem Mikroskopobjekttisch befindet.
3. Die Lösung A wirkt über eine bestimmte Zeit auf das Objekt ein ( z.B. 20 min bei Raumtemperatur).
4. Sofort im Anschluß an 3 wird diese Inkubationslösung durch den Pipettierroboter abgesaugt und verworfen oder fakultativ in ein besonderes Abwurfgefäß (Reaktionsgefäß) im Rack des Automaten abpipettiert.
5. Es erfolgen 10 aufeinanderfolgende Waschschritte mit Puffer, die von dem Pipettierroboter aus Reaktionsgefäßen im Rack der Reihe nach aufgenommen, auf die Zellprobe aufgebracht und dann wieder abgesaugt und verworfen werden. Dauer der einzelnen Waschschritte ca. 2 min.
6. Nach Beendigung der 10 Waschschritte wird erneut eine Pufferlösung auf die Probe aufgebracht.
7. Unmittelbar nach Schritt 6 wird im Phasenkontrast-Modus automatisch für eine bestimmte Zeit mit Hilfe des Bildaufnahmegerätes (z.B. CCD Kamera) über eine bestimmte Zeit ein Bild aufgenommen und abgespeichert. Es erfolgen Bildaufnahmen in mehreren Z Ebenen durch das Präparat hindurch, um mit Hilfe von Algorithmen die optimale Schärfeebene zu ermitteln.
8. Nach Schritt 7 erfolgt die Öffnung des Fluoreszenzschiebers und Aufzeichnung des Fluoreszenzsignals, das von dem Fluorochrom Phycoerythrin ausgeht. Die entsprechenden Fluoreszenzfilterdaten müssen in dem Mikroskop so gewählt werden, daß eine praktisch absolute Trennung zwischen PE und FITC möglich ist: z.B. Emissionsfilter für PE (DEPIL 575± 7 nm) und für FITC (BP 515 - 545 nm). Die Aufnahme erfolgt für jedes einzelne der beiden Fluoreszenzsignale getrennt für frei programmierbare Zeiten (angepaßt an die Zellprobe) oder fakultativ simultan über dichroitische Filter. Nach einer definierten Aufzeichnungszeit erfolgt das Schließen des Fluoreszenzschiebers.
9. Nach Schritt 8 erfolgt unmittelbar die Bleichung der Probe durch Daueröffnen des Fluoreszenzschiebers und Anregung der Probe mit Hilfe der Anregungswellenlänge (weiches Bleichen dieser Art zerstört die gebundenen Fluorochrome, schont aber die Eigenschaften der immunogenen Domänen).
10. Nach Beendigung der Bleichungszeit wird erneut automatisch der Fluoreszenzschieber geöffnet und es wird mit derselben Zeit wie oben für jedes einzelne Fluorochrom ein Signal über das Bildaufnahmegerät aufgezeichnet (diese Signalaufzeichnung gibt Auskunft darüber, ob die Bleichungszeit für eine vollständige Beseitigung eines Emissionssignals ausgereicht hat: Hierüber entscheidet die Software des Automaten oder es werden jeweils zuvor feste Zeiten für diesen Vorgang programmiert).

### Zyklus 2:

11. Nach Schritt 10 erfolgt Absaugen der Pufferlösung durch den Pipetting Roboter und anschließend Aufbringen einer Lösung B (bestehend aus 80 Mikroliter Puffer + 10 Mikroliter monoklonaler Antikörper-3, gekoppelt an FITC + 10 Mikroliter Antikörper-4, gekoppelt an PE).
12. Nach Schritt 11 erfolgen dann dieselben Schritte wie oben (2 bis 10: Zyklus 2).

### Zyklus 3:

13. Nach Beendigung des Zyklus 2 erfolgt sinngemäß Zyklus 3 mit einer neuen Lösung C (für weitere 2 Antikörper der Spezifität 5 und 6, jeweils gekoppelt an FITC und PE, respektive).

Nach Zyklus 3 können weitere N Zyklen für eine praktisch beliebige Anzahl verschiedener Antikörper automatisch gefahren werden, ohne daß dadurch die Spezifität der Markierung leidet.

Bei diesem Prinzip bleiben die Antikörper mit den gekoppelten bleichungszerstörten Fluorochromen an den Zellen gebunden, während die Zellen immer weiter mit neuen Flurochrom-gekoppelten Antikörpern an den jeweils spezifischen Bindungsstellen beladen werden. Es tritt keine sterische Behinderung bei diesen Bindungen auf: Dies kann durch Vertauschen der Reihenfolge der Antikörperreaktionen in jedem beliebigen Ansatz gezeigt werden.

Auf diese Weise können praktisch beliebig zahlreiche Molekülklassen in einzelnen Zellen nachgewiesen werden. Es ergibt sich die Möglichkeit, molekulare Kombinatorik in Zellen systematisch zu untersuchen.

## Patentansprüche

1. Automatisierte Vorrichtung zur Bestimmung und Messung von Molekülklassen, Molekülgruppen und Molekülteilen auf einem flüssigen oder festem Objekt bzw. in einem flüssigen oder festem Objekt, wobei die Vorrichtung eine Kombination aus einem Pipettiersystem, einem 3D-Handhabesystem und einem optischen Meßsystem umfasst,
wobei das Pipettiersystem, das 3D-Handhabesystem und das optische Meßsystem durch einen Computer gesteuert und kontrolliert werden und das Pipettiersystem eine automatische Pipettierung für die Aufnahme und Abgabe von Flüssigkeiten, einen automatischen Pipettenwechsel und eine angemessene Wiederholpositioniergenauigkeit, bevorzugt von mindestens ± 0,1 mm, aufweist
**dadurch gekennzeichnet,**
**daß** die Vorrichtung mit einem Bildaufnahmegerät, insbesondere einer Kamera, ausgestattet ist und das Bildaufnahmegerät beliebig viele Einzelmarkierungsmuster von ein und demselben zu untersuchenden Objekt aufnimmt und diese durch computergestützte Bildüberlagerungen in hochkomplexe molekulare Kombinationsmuster überführt, wobei in ein und demselben Objekt mindestens zwei Molekülklassen, Molekülgruppen oder Molekülteile bestimmt und gemessen werden.

2. Automatisierte Vorrichtung nach Anspruch 1,
**dadurch gekennzeichnet,**
**daß** das 3D-Handhabesystem das Pipettensystem mit einer vorgegebenen Wiederholpositioniergenauigkeit hin und her bewegen kann.

3. Automatisierte Vorrichtung nach Anspruch 1 oder 2,
**dadurch gekennzeichnet,**
**daß** das optische Meßsystem ein inverses oder aufrechtes Mikroskopstativ umfasst.

4. Automatisierte Vorrichtung nach Anspruch 3, **dadurch gekennzeichnet,**
**daß** das Mikroskopstativ mit einer Klimabox ausgestattet ist.

5. Automatisierte Vorrichtung nach einem der Ansprüche 1 bis 4,
**dadurch gekennzeichnet,**
**daß** das 3D-Handhabesystem ein Roboter- oder Linearführungssystem umfasst.

6. Automatisiertes Verfahren zur Bestimmung von Molekülklassen, Molekülgruppen Molekülteilen in einem festen oder flüssigen Objekt, **dadurch gekennzeichnet,**
**daß** in ein und demselben Objekt mindestens zwei Molekülklassen, Molekülgruppen oder Molekülteile mittels gleichzeitiger oder sequentieller Aufbringung beliebig vieler Reagenzlösungen Yn (n = 1,2,3...N) untersucht und gemessen werden, wobei das Verfahren beliebig oft wiederholbare Inkubations- und/oder Bleichungszyklen umfasst und nach jedem Verfahrenszyklus das Signalverteilungsmuster des zu untersuchenden ein und demselben Objekts registriert wird und die in jedem Verfahrenszyklus erhaltenen Signalverteilungsmuster durch computergestützte Bildüberlagerung in ein komplexes Gesamtbild des zu untersuchenden Objekts, nämlich in ein hochkomplexes molekulares Kombinationsmuster des Objekts, überführt werden.

7. Automatisiertes Verfahren nach Anspruch 6,
**dadurch gekennzeichnet,**
**daß** das Verfahren die folgenden automatisierten Schritte umfasst:
I. Aufnahme einer ersten Reagenzlösung Y1 aus einem Behälter, der die Lösung enthält,
II. Aufbringen der Reagenzlösung Y1 auf das Objekt, das sich auf einer objekttragenden Vorrichtung befindet,
III. Einwirken der Reagenzlösung über einen automatisch eingestellten Zeitraum,
IV. Aufzeichnung eines Bildes bzw. des Messwertes des zuvor mit der ersten Reagenzlösung Y1 behandelten Objekts oder alternativ die Durchführung des Schrittes V vor dem Schritt IV,
V. Entfernen der Reagenzlösung Y1,
VI. Wiederholung der Schritte I-V durch wiederholtes Aufbringen der ersten Reagenzlösung Y1 oder einer zweiten Reagenzlösung Y2 oder eines Gemisches aus erster und zweiter Reagenzlösung, und
VII. Wiederholung der Schritte I bis VI mit beliebig vielen Reagenzlösungen Yn (n = 1,2,3...N) oder einem Gemisch davon.

8. Automatisiertes Verfahren nach Anspruch 6 oder 7, **dadurch gekennzeichnet,**
**daß** entweder sofort oder nach einem variabel bestimmbaren Zeitraum nach dem Entfernen der ersten oder zweiten Reagenzlösung oder der Reagenzlösung Yn oder eines Gemisches davon in Schritt V gemäß Anspruch 7 mindestens eine Waschlösung Z1 oder Z2 oder Zn (n = 1,2,3...N) auf das Objekt gebracht wird.

9. Automatisiertes Verfahren nach einem der Ansprüche 6 bis 8, **dadurch gekennzeichnet,**
**daß** die Reagenzlösungen Farbstoffe, Komplexbildner, Antikörper, Liganden, insbesondere fluorochrom-konjugierte Antikörper oder Liganden umfassen.

10. Automatisiertes Verfahren nach einem der.Ansprüche 6 bis 9, **dadurch gekennzeichnet,**
**daß** das Objekt eine Probe, eine Gewebeprobe eine Zelle oder mehrere Zellen ist.

11. Automatisiertes Verfahren nach einem der Ansprüche 6 bis 10, **dadurch gekennzeichnet,**
**daß** das Verfahren die folgenden automatisierten Verfahrensschritte aufweist:
I. Aufnahme einer ersten Reagenzlösung Y1, insbesondere einer fluorochromhaltigen Lösung, aus dem Behälter und Aufpipettieren der Lösung auf eine Probe, Gewebeprobe, eine Zelle oder Zellen,
II. Inkubation der Probe, Gewebeprobe, Zelle oder der Zelle über einen bestimmten Zeitraum,
III. Entfernen der Reaktionslösung Y1, einmaliges oder mehrmaliges Aufpipettieren einer Waschlösung Z1 bis Zn,
IV. Registrierung des Markierungsverteilungsmusters,
V. Bleichen des Objekts bis keine Fluoreszenz mehr nachweisbar ist,
VI. Aufnahme einer zweiten Reagenzlösung, und
VII. Wiederholung der Schritte I bis VI mit beliebig vielen Reagenzlösungen Yn oder Gemischen davon (repetitiver Markierungs-Bildaufnahme-Bleichungs-Zyklen).

## Claims

1. Automated device for determining and measuring molecule classes, molecule groups and molecule portions on a liquid or solid object or in a liquid or solid object, respectively, the device including a combination of a pipetting system, a 3D handling system and an optical measuring system, the pipetting system, the 3D handling system and the optical measuring system being driven and controlled by a computer, and the pipetting system having an automatic pipetting for receiving and delivering liquids, an automatic pipette change and an adequate repetition positioning accuracy of preferably at least ± 0,1 mm,
**characterized in that**
the device is provided with an image taking apparatus, especially a camera, and the image taking apparatus takes any number of single mark patterns of one and the same object to be examined, and transfers them into highly complex molecular combination patterns by computer-aided image superpositions, wherein in one and the same object at least two molecule classes, molecule groups or molecule portions can be determined and measured.

2. Automated device according to claim 1,
**characterized in that**
the 3D handling system is able to reciprocate the pipette system with a preset repetition positioning accuracy.

3. Automated device according to claim 1 or 2,
**characterized in that**
the optical measuring system includes an inverse or upright microscope stand.

4. Automated device according to claim 3, **characterized in that**
the microscope stand is provided with an air conditioning box.

5. Automated device according to any one of claims 1 to 4,
**characterized in that**
the 3D handling system includes a robotic or linearly guiding system.

6. Automated method for determining molecule classes, molecule groups, molecule portions in a solid or liquid object, **characterized in that**
in one and the same object at least two molecule classes, molecule groups or molecule portions are examined and measured by means of simultaneous or sequential application of any number of reagent solutions Yn (n = 1, 2, 3 ... N), wherein the method includes incubating and/or bleaching cycles repeatable with any frequency, and after each procedural cycle the signal distribution pattern of one and the same object to be examined is registered, and the signal distribution patterns obtained in each procedural cycle are transferred into a complex total image of the object to be examined by computer-aided image superposition, namely into a highly complex molecular combination pattern of the object.

7. Automated method according to claim 6,
**characterized in that**
the method includes the following automated steps:
I. Receiving a first reagent solution Y1 from a container containing the solution,
II. Applying the reagent solution Y1 to the object located on an object-supporting device,
III. Reaction of the reagent solution over an automatically adjusted period of time,
IV. Recording an image or the measurement value of the object previously treated with the first reagent solution Y1, respectively, or alternatively performing step V before step IV,
V. Removing the reagent solution Y1,
VI. Repeating steps I-V by repeated application of the first reagent solution Y1 or of a second reagent solution Y2 or of a mixture of first and second reagent solutions, and
VII. Repeating steps I to VI with any number of reagent solutions Yn (n = 1, 2, 3 ... N) or a mixture thereof.

8. Automated method according to claim 6 or 7, **characterized in that**
either immediately or after a variably determinable period of time after removing the first or second reagent solution or of the reagent solution Yn or of a mixture thereof in step V according to claim 7, at least one washing solution Z1 or Z2 or Zn (n = 1, 2, 3 ... N) is applied to the object.

9. Automated method according to any one of claims 6 to 8, **characterized in that**
the reagent solutions comprise dyes, complexing agents, antibodies, ligands, especially fluorochrome-conjugated antibodies or ligands.

10. Automated method according to any one of claims 6 to 9, **characterized in that**
the object is a sample, a tissue sample, a cell or plural cells.

11. Automated method according to any one of claims 6 to 10, **characterized in that**
the method includes the following automated method steps:
I. Receiving a first reagent solution Y1, especially a fluorochrome-containing solution, from the container, and pipetting the solution to a sample, tissue sample, a cell or cells,
II. Incubating the sample, tissue sample, cell or cells over a certain period of time,
III. Removing the reagent solution Y1, pipetting a washing solution Z1 to Zn once or multiple times,
IV. Registering the mark distribution pattern,
V. Bleaching the object until fluorescence is no longer detectable,
VI. Receiving a second reagent solution, and
VII. Repeating steps I to VI with any number of reagent solutions Yn or mixtures thereof (repetitive cycles of marking - image taking - bleaching).

## Revendications

1. Dispositif automatique pour déterminer et mesurer des classes de molécules, des groupes de molécules et des fractions de molécules sur un objet liquide ou solide respectivement dans un objet liquide ou solide, le dispositif comprenant une combinaison d'un système de pipettage, d'un système de manutention 3D et d'un système optique de mesure, le système de pipettage, le système de manutention 3D et le système optique de mesure étant pilotés et surveillés par un ordinateur et le système de pipettage comportant un mécanisme de pipettage automatique pour la réception et l'évacuation de liquides et un mécanisme de changement de pipettes et présentant une précision de positionnement réitérée adéquate, de préférence d'au moins ±0,1 mm,
**caractérisé en ce que**
le dispositif est équipé d'un appareil de prise de vues, notamment une caméra, l'appareil de prise de vues prenant un nombre quelconque de modèles de marquage individuels d'un même objet à étudier pour transformer ceux-ci, grâce à des recouvrements d'images assistés par ordinateur en des modèles de combinaison moléculaires hautement complexes, au moins deux classes de molécules, groupes de molécules ou fractions de molécules étant déterminés et mesurés dans un même objet.

2. Dispositif automatisé selon la revendication 1,
**caractérisé en ce que**
le système de manutention 3D est susceptible de déplacer, dans un mouvement de va-et-vient, le système de pipettage, avec une précision de positionnement réitérée prédéterminée.

3. Dispositif automatisé selon la revendication 1 ou 2,
**caractérisé en ce que**
le système de mesure optique comporte un pied de microscope inverse ou droit.

4. Dispositif automatisé selon la revendication 3,
**caractérisé en ce que**
que le pied de microscope est équipé d'une boîte de climatisation.

5. Dispositif automatisé selon l'une des revendications 1 à 4,
**caractérisé en ce que**
le système de manutention 3D comprend un système à robot ou de guidage linéaire.

6. Dispositif automatisé pour la détermination de classes de molécules, de groupes de molécules, de fractions de molécules dans un objet solide ou liquide,
**caractérisé en ce que**
dans un même objet, au moins deux classes de molécules, groupes de molécules ou fractions de molécules sont étudiés et mesurés à l'aide d'un dépôt simultané ou séquentiel d'un nombre voulu de solutions de réactifs Yn (n=1,2,3...N), le procédé comprenant des cycles d'incubation et/ou de blanchiment et **en ce qu'**au bout de chaque cycle du procédé, le modèle de répartition de signal du même objet à étudier est enregistré et que les modèles de répartition de signal sont transformés, à l'aide d'un recouvrement d'images assisté par ordinateur, en une image globale complexe de l'objet à étudier, à savoir un modèle de combinaison moléculaire hautement complexe de l'objet.

7. Procédé automatisé selon la revendication 6,
**caractérisé en ce que**
le procédé comprend les étapes automatisées suivantes:
I. Réception d'une première solution de réactifs Y1 depuis un réservoir contenant ladite solution,
II. dépôt de la solution de réactifs Y1 sur l'objet se trouvant sur un dispositif porteur d'objets,
III. agitation de la solution de réactifs pendant une période réglée automatiquement,
IV. enregistrement d'une image respectivement de la valeur mesurée de l'objet ayant été traité auparavant avec la première solution de réactifs Y1 ou, alternativement, réalisation de l'étape V avant l'étape IV,
V. essuyage de la solution de réactifs Y1,
VI. répétition des étapes I-V par dépôt réitéré de la première solution de réactifs Y1 ou d'une deuxième solution de réactifs Y2 ou d'un mélange des deux, et
VII. répétition des étapes I à VI avec un nombre voulu des solutions de réactifs Yn (n = 1, 2, 3... N) ou d'un mélange de celles-ci.

8. Procédé automatisé selon la revendication 6 ou 7,
**caractérisé en ce que**
tout de suite ou au bout d'une période variable à volonté après l'essuyage de la première ou de la deuxiéme solution de réactifs ou de la solution de réactifs Yn ou d'un mélangé de celles-ci, au moins une solution de lavage Z1 ou Z2 ou Zn (n = 1, 2, 3...N) est déposée sur l'objet, dans l'étape V selon la revendication 7.

9. Dispositif automatisé selon l'une des revendications 6 à 8,
**caractérisé en ce que**
les solutions de réactifs comprennent des colorants, des agents complexants, des anticorps, des ligands, notamment des anticorps ou ligands conjugués au fluorochrome.

10. Dispositif automatisé selon l'une des revendications 6 à 9,
**caractérisé en ce que**
l'objet est un échantillon, un échantillon de tissu, une cellule ou plusieurs cellules.

11. Dispositif automatisé selon l'une des revendications 6 à 10,
**caractérisé en ce que**
le procédé comprend les étapes automatisées suivantes:
I. Réception d'une première solution de réactifs Y1, notamment une solution fluorochromée, depuis le réservoir et pipettage de la solution sur un échantillon, un échantillon de tissu, une cellule ou des cellules,
II. incubation de l'échantillon, d'un échantillon de tissu, d'une cellule ou cellules pendant une période déterminée,
III. essuyage de la solution de réactifs Y1, pipettage unique ou multiple d'une solution de lavage Z1 à Zn,
IV. enregistrement du modèle de répartition du marquage,
V. blanchiment de l'objet jusqu'à ce qu'il n'y ait plus de fluorescence détectée,
VI. réception d'une seconde solution de réactifs, et
VII. répétition des étapes I à VI avec un nombre voulu de solutions de réactifs Yn ou d'un mélange de celles-ci (cycles répététifs de marquage-prise de vues-blanchiment).
